Europäisches Patentamt

European Patent Office

Office européen des brevets

(19)

(11) Publication number: **0 219 918**
A1

(12)

# EUROPEAN PATENT APPLICATION

(21) Application number: **86201835.5**

(22) Date of filing: **22.10.86**

(51) Int. Cl.⁴: **H 02 G 1/08**

(30) Priority: **24.10.85 NL 8502905**

(43) Date of publication of application:
**29.04.87 Bulletin 87/18**

(84) Designated Contracting States:
**AT BE CH DE ES FR GB GR IT LI LU NL SE**

(71) Applicant: **Mohrien, Jochen Werner**
**Wilhelminastraat 14**
**NL-5941 GJ Velden(NL)**

(72) Inventor: **Mohrien, Jochen Werner**
**Wilhelminastraat 14**
**NL-5941 GJ Velden(NL)**

(74) Representative: **Noz, Franciscus Xaverius, Ir. et al,**
**Boschdijk 155 P.O. Box 645**
**NL-5600 AP Eindhoven(NL)**

(54) Means for and method of pulling wires through tubes.

(57) Means for pulling wires through tubes, whereby it comprises a clamp holder provided with a number of wire clamps.

FIG.2.

EP 0 219 918 A1

0219918

-1-

Means for and method of pulling wires through tubes.

The invention relates to a means for pulling wires through tubes and to a method  of pulling wires through tubes by way of said means.

In particular the present invention is aimed at pulling electric wires through electric tubes, whether flexible or not.

The following method of pulling electric wires through electric tubes is known. First a pulling wire is inserted into an electric tube from one end until it comes out at the other end of the electric tube. Then, if this has not been done before, the end of the pulling wire coming out of the other end of the electric tube is stripped, after which, in so far as this has not been done before, the electric wires to be pulled through the electric tube, e.g. seven, are all stripped at one end as well. Then the stripped ends of all wires, i.e. pulling wire and wires to be pulled are twisted together in such a manner that the wires to be pulled can be pulled through the electric tube by the pulling wire.

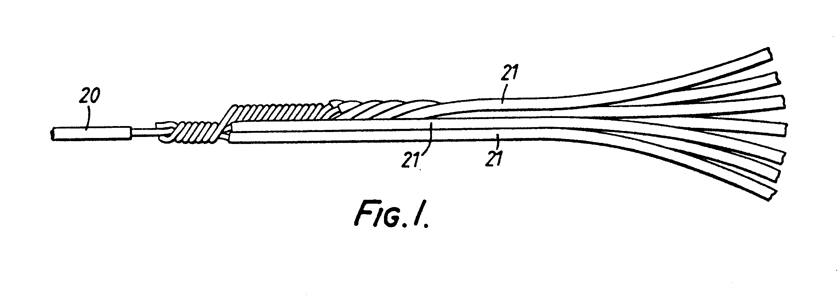

Twisting together the wires, in particular their stripped ends, must be done in such a manner that the wires to be pulled through the electric tube form a bundle as narrow as possible, whereby the wires to be pulled lie substantially parallel to each other in the bundle. Fig 1 of the drawing to be described later indicates  in what manner the above twisting together may be done.

The known method discussed above has the following disadvantages. The wires must be stripped along a relatively great length, i.e. the insulation must be removed. After pulling the stripped ends are cut off which results in a rather large waste of material.

The twisting together needs to be done sensibly and carefully in order to keep the diameter of the bundle described above as small as possible and not to injure one's hands, which results in loss of time.

In order to prevent furthermore that the cut-off ends of the stripped parts of the wires twisted together get stuck in the interior of the tube during pulling the entire twisted together part is wrapped in insulating tape, with of course the added expense of insulating tape and more time.

Finally there is always the possibility that the electric wires become loose when being pulled, thus making further pulling difficult or impossible.

Summarizing it is not possible according to the state of the art to pull the wires trouble-free, whilst furthermore there is great waste of material and time.

The present invention has for its purpose to remove at least the above disadvantages and for that purpose provides a means of the kind mentioned in the preamble, characterised in that it comprises a clamp holder provided with a number of wire clamps.

Preferential embodiments of the means according to the present invention are indicated in the attached sub-claims 2-14.

When the invention is also applied to pulling electric wires through electric tubes the wires, i.e. the pulling wire included, are also stripped but then along an essentially shorter length and the stripped wire ends are then inserted into the wire clamps, from which they cannot be removed by pulling back as a result of the action of the wire clamps. Practical tests have shown that with the pulling forces normally occurring during pulling the wires do not become detached from the means. Thus no insulating tape needs to be applied, nor will additional measures to prevent detachment be necessary.

The advantages of the present invention are, therefore, that wires can be pulled trouble-free and that there is no waste of material, nor waste of time.

The means according to the present invention can be produced cheap and can possibly be arranged for re-use, but also for partial re-use, in particular by separation of a used part from the means.

The method according to the invention is characterised by the measures according to any of the attached claims 15-19.

The invention will now be more fully described with reference to the drawing, in which:

Fig 1 illustrates the stripped parts, twisted together, of the pulling wire and the wires to be pulled.

Fig 2 diagrammatically illustrates a possible embodiment of the means according to the invention.

Fig 3 diagrammatically illustrates a sectional view of a examplary wire clamp of a means according to the invention.

In fig 1 the pulling wire is indicated with 20 whilst some wires to be pulled are indicated with 21.

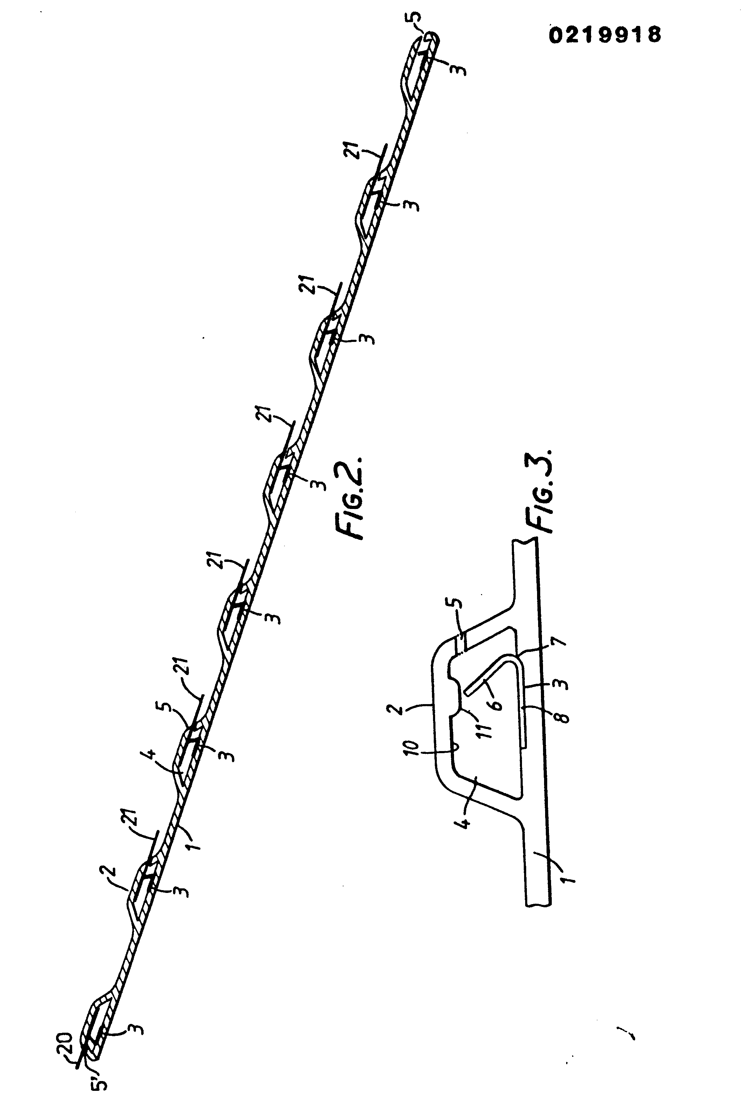

As can be seen in fig 2 the means for pulling wires, in particular electric wires, through tubes, in particular electric tubes, whether flexible or not, comprises a clamp holder 1 provided with a number of wire clamps 2. In the illustrated embodiment of the means according to the invention the clamp holder 1 is elongated and preferably made of plastic material, whilst the wire clamps 2 are provided spaced in the longitudinal direction of the clamp holder 1. The wire clamps 2 may be provided on the clamp holder 1, but in the illustrated embodiment the wire clamps 2 are embedded in the clamp holder 1.

The wire clamps 2 may be completely made of plastic material and form one whole with the clamp holder 1. In the illustrated embodiment the wire clamps 2 forming one whole with the clamp holder 1 comprise metal, preferably steel, springs 3.

Referring now to both figures 2 and 3 the wire clamps 2 comprise a preferably closed cavity 4 for accommodating a preferably stripped wire end of either a wire 21, or a pulling wire 20, an opening 5, 5' for inserting the wire end into the cavity 4 from the outside of the wire clamp 2 and at least one spring 3·incorporated in the cavity in line with the opening 5, 5', the spring 3 being formed and/or arranged such that it only allows movement of the wire end into, and, therefore, not out of the cavity 4.

Although the cavities 4 of the wire clamps 2 are closed in the illustrated embodiment, with the exception of the opening 5,5', another opening might be provided opposite the opening 5, 5', through which the cut-off ends might be pulled by the wire clamp after pulling of the wires, so that the means might be used again. The latter embodiment of the means might be preferred, when the saving of material, the means in the present case, compensates for the extra time spent on pulling out the stripped wire ends.

As illustrated in fig 2 the centre line of the opening 5' makes an angle of $\pi$ rad with that of the remaining openings 5. This means that the pulling wire 20 in fig 2 is inserted from the left, whilst the wires 21 are inserted from the right. Also it is possible to provide several openings 5', making an angle of $\pi$ rad with that of the remaining openings 5, whereby it is preferred, with a view to re-use, to provide the openings 5' in line, so that with the first use of the means the outermost opening 5' can be used for inserting the pulling wire 20 and for a second use of the means the opening 5' located immediately therebehind, when not all openings 5 are used for pulling electric wires 21, e.g. two instead of five, whereby preferably the two outermost openings 5 are used then. By cutting off the parts of the clamp holder with the outermost opening 5' and the outermost openings 5 a means for pulling four electric wires is thus obtained.

It is no objection thereby when the means last-described, two openings 5' and six openings 5, is used for pulling seven electric wires with one pulling wire.

Although in the illustrated embodiment all openings 5, 5' are arranged in line on a longitudinal axis of the clamp holder 1 the openings may be provided staggered on the clamp holder and the centre lines of respective openings may furthermore make other, possibly different angles with each other.

As shown in particular in fig 3 the springs 3 of the wire clamps 2 are substantially V- or U-shaped, whereby the point 7 of the springs 3 is directed towards the opening 5, one of the legs 8 abutts fixedly against a wall of the cavity 4 and the other leg 9 ends near another wall of the cavity, as shown, or abutts against it. The wall 10 near which the leg 9 of the spring 3 ends may be provided with a thickening 11 opposite the end of the leg 9 in order to block the wire end inserted into the opening 5, 5' more securely against being pulled out.

Although one spring 3 is provided in the cavity 4 in fig 3, several springs may be provided in line, whereby of course several thickenings 11 may also be provided. The point 7 of a second spring 3 is then located near the end of the leg 8 of a spring 3 located in front thereof.

As already said the present invention also relates to a method for pulling wires, in particular electric wires, through tubes, preferably electric tubes, by providing a pulling wire 20 in a tube through which wires are to be pulled, coupling the wires 21 with the pulling wire and pulling the wires to be pulled through the tube (not shown in the figures) with the pulling wire, whereby both the pulling wire and the wires to be pulled are inserted into the openings 5' and 5 respectively of the wire clamps 2 of a means according to the invention.

Preferably the wires are stripped before being inserted into the openings 5,5' of the wire clamps 2. This latter method is preferred when the time required for stripping the wires is compensated for by the ease of inserting the wires into the openings and the improved reliability.

As already said the wires may be cut off the means after pulling and the means discarded. Also it will be possible to selectively cut the selectively used wire clamps with the parts of the clamp holder 1 belonging thereto off the means, after which the remaining part of the means can be re-used again.

As also said before it will be possible, when two openings 5, 5' are used in a wire clamp, to pull the cut-off pieces out of the wire clamp after cutting off and re-use the entire part again.

When the means according to the invention are not intended for re-use they are simply cut off the wires.

Finally it is noted that the means may take various shapes and all kinds of methods for the use of the means may be applied, all being embodiments of the present invention, as long as the means serves to pull wires through a tube with a pulling wire by clamping the wires to the means. Especially electricians will realise the enormous advantages of said means and the present method.

-1-

CLAIMS

1. Means for pulling wires through tubes, characterised in that it comprises a clamp holder provided with a number of wire clamps.

2. Means according to claim 1, characterised in that the clamp holder is elongated.

3. Means according to claim 2, characterised in that the wire clamps are provided spaced in the longitudinal direction of the clamp holder.

4. Means according to any of the preceding claims, characterised in that the wire clamps are embedded in the clamp holder.

5. Means according to any of the claims 1-3, characterised in that the wire clamps are provided on the clamp holder.

6. Means according to any of the preceding claims, characterised in that the wire clamps comprise a cavity for accommodating a wire end, an opening for inserting the wire end into the cavity from the outside of the wire clamp and at least one spring incorporated in the cavity in line with the opening, said spring being shaped and/or arranged in the cavity such that it only allows movement of the wire end into the cavity.

7. Means according to claim 6, characterised in that with the exception of the opening the cavities of the wire clamps are closed.

8. Means according to claim 6 or 7, characterised in that the centre line of at least one of the openings makes an angle of $\pi$ rad with that of the remaining openings.

9. Means according to any of the claims 6-8, characterised in that the openings are arranged in line on a longitudinal axis of the clamp holder.

10. Means according to any of the claims 6-9, characterised in that the springs are substantially V- or U-shaped, the point being directed towards the opening, one of the legs abutting fixedly against a wall of the cavity and the other leg abutting freely against another wall of the cavity or ending near it.

11. Means according to any of the claims 6-10, characterised in that the wire clamps comprise several springs arranged in line.

12. Means according to any of the preceding claims, characterised in that at least the clamp holder is made of plastic material.

13. Means according to any of the preceding claims, characterised in that the springs are made of metal.

14. Means according to any of the preceding claims, characterised in that it is arranged for pulling electric wires through tubes, whether flexible or not.

15. Method of pulling wires through tubes by providing a pulling wire in a tube, coupling the wires to be pulled to the pulling wire and pulling the pulling wire through the tube, characterised in that the wires to be pulled are coupled to the pulling wire by inserting the ends of said wires through the openings into the cavities of a number of wire clamps of a means according to any of the preceding claims.

16. Method according to claim 15 in so far as the wires are electric wires, characterised in that the wires are stripped before being inserted into the cavities.

17. Method according to claim 15 or 16, characterised in that after pulling the means is separated from the wires.

18. Method according to claim 16 or 17, characterised in that in so far as it applies here the non-used part of the means is separated from the remainder of the means in order to be re-used.

19. Method according to claim 18, characterised in that the part intended for re-use is separated from the means in such a manner that at least one of the wire clamps of the part of the means intended for re-use has an opening which makes an angle of $\pi$ rad with those of the remaining ones.

FIG.1.

0219918

FIG.2.

FIG.3.

0219918

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 171 123  (WOELKERS)  <br><br> *  Column  3, line 10 - column 5, line 20 * | 1-3,6, 7,9,14 ,15,17 ,18 | H 02 G  1/08 |
| A | US-A-2 612 546  (ROMSOS)  <br><br> * Figures 5,6 * | | |

TECHNICAL FIELDS
SEARCHED (Int. Cl.4)

H 02 G  1/00

The present search report has been drawn up for all claims

| Place of search | Date of completion of the search | Examiner |
|---|---|---|
| THE HAGUE | 13-01-1987 | BERTIN M.H.J. |